(19) Europäisches Patentamt
European Patent Office
Office européen des brevets

(11) Publication number : **0 589 701 A1**

(12) **EUROPEAN PATENT APPLICATION**

(21) Application number : **93307546.7**

(22) Date of filing : **23.09.93**

(51) Int. Cl.$^5$ : **C08K 3/22,** C08K 5/09

(30) Priority : **24.09.92 JP 254484/92**

(43) Date of publication of application :
**30.03.94 Bulletin 94/13**

(84) Designated Contracting States :
**CH DE ES FR GB IT LI**

(71) Applicant : **SUMITOMO CHEMICAL COMPANY, LIMITED**
**5-33, Kitahama 4-chome Chuo-ku**
**Osaka (JP)**

(72) Inventor : **Yamamoto, Keisaku**
**5-3-14, Aobadai**
**Ichihara-shi, Chiba 299-01 (JP)**
Inventor : **Ikeda, Kiyoshi**
**152-1, Ichihara**
**Ichiara-shi, Chiba 290 (JP)**
Inventor : **Koshiba, Junichi**
**1-9-826, Yuushuudainishi**
**Ichihara-shi, Chiba 299-01 (JP)**

(74) Representative : **Cresswell, Thomas Anthony**
**J.A. Kemp & Co. 14 South Square Gray's Inn**
**London WC1R 5LX (GB)**

(54) **Rubber composition.**

(57) A rubber composition which when vulcanized is suitable for covering electric cables comprises
a) ethylene-α-olefin copolymer rubber and/or ethylene-α-olefin-nonconjugated diene copolymer rubber,
b) aluminium hydroxide and/or magnesium hydroxide, and
c) at least one zinc acrylate compound represented by the following formula (1) :

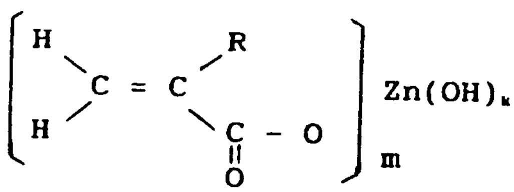

(I)

wherein R represents a hydrogen atom or a methyl group, m represents an integer of 1 to 2 and k represents an integer of 0 to 1.

EP 0 589 701 A1

The present invention relates to a rubber composition. The rubber composition can provide a vulcanized rubber composition suitable for covering material for electric cables.

It is known that vulcanized ethylene-α -olefin copolymer rubbers such as ethylene-propylene copolymer rubber (EPM) or ethylene-α -olefin-nonconjugated diene copolymer rubbers such as ethylene-propylene-nonconjugated diene copolymer rubber (EPDM) have usually large heat-resistance, ozone-resistance and polar solvent-resistance but are not satisfactory in strength and flame-resistance.

An object of the present invention is to provide an ethylene-α -olefin copolymer rubber composition or an ethylene-α -olefin-nonconjugated diene copolymer rubber composition which can provide a vulcanized rubber composition having large strength and flame-resistance as well as excellent properties of vulcanized ethylene-α -olefin copolymer rubbers or ethylene- α -olefin-non-conjugated diene copolymer rubbers. The vulcanized rubber composition is suitable, for example, for a covering material for electric cables.

According to the present invention, a rubber composition is provided which comprises

a) ethylene- α -olefin copolymer rubber and/or ethylene-α -olefin-nonconjugated diene copolymer rubber,

b) aluminium hydroxide and/or magnesium hydroxide, and

c) at least one zinc acrylate compound represented by the following formula (1):

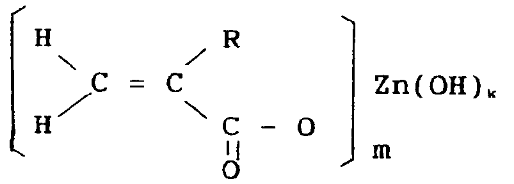

(1)

wherein R represents a hydrogen atom or a methyl group, m represents an integer of 1 to 2 and k represents an integer of 0 to 1.

The α -olefin includes propylene, l-butene, 1-hexene, 4-methyl-1-pentene, 1-octene, 1-decene and the like. Propylene is preferable.

The nonconjugated diene includes chain nonconjugated dienes such as 1,4-hexadiene, 1,6-octadiene, 2-methyl-1,5-hexadiene, 6-methyl-1,5-heptadiene and 7-methyl-1,6-octadiene; cyclic nonconjugated dienes such as cyclohexadiene, dicyclopentadiene, methyltetrahydoindene, 5-vinylnorbornene, 5-ethylidene-2-norbornene, 5-methylene-2-norbornene, 5-isopropylidene-2-norbornene and 6-chloromethyl-5-isopropenyl-2-norbornene; and trienes such as 2,3-diisopropylidene-5-norbornene, 2-ethylidene-3-isopropylidene-5-norbornene, 2-propenyl-2, 2-norbornadiene, 1,3,7-octatriene and 1,4,9-decatoriene. 1,4-Hexadiene, dicyclopentadiene and 5-ethylidene-2-norbornene are preferable.

Either aluminium hydroxide or magnesium hydroxide may be used. Alternatively, both of them may be used. In any case, the amount of the hydroxides is unusually 5 to 1000 parts by weight, preferably 50 to 600 parts by weight every 100 parts by weight of the amount of ethylene-α -olefin copolymer rubber and ethylene-α -olefin-nonconjugated diene copolymer rubber. Too small amount of aluminium hydroxide and/or magnesium hydroxide often gives the vulcanized rubber composition insufficient flame-resistance, while too large amount of the hydroxides often degrades elasticity and mechanical properties of the vulcanized rubber composition.

Zinc acrylate compound represented by the formula (1) includes zinc diacrylate, zinc acrylate hydroxide and zinc dimethacrylate. Zinc acrylate compounds may be used alone or in combination. The amount of the zinc acrylate compound to be used is usually 0.1 to 100 parts by weight, preferably 1 to 50 parts by weight every 100 parts by weight of the amount of ethylene-α -olefin copolymer rubber and ethylene-α -olefin-noncongujated diene copolymer rubber. Too small amount of the zinc acrylate compound often degrades strength of the vulcanized rubber composition, while too large amount is not economical because no further improvement is obtained in strength and besides, flame-resistance of the vulcanized rubber composition is sometimes deteriorated.

In the present invention, aluminium hydroxide and/or magnesium hydroxide are used in combination with zinc acrylate compound. The aluminium hydroxide and/or magnesium hydroxide gives not only flame-resistance but also strength. It is one of the most characteristic features of the present invention that aluminium hydroxide and/or magnesium hydroxide is an agent for increasing strength when used in combination with zinc acrylate compound. Thus, the rubber composition of the present invention has extremely large strength which is hardly expected from conventional vulcanized ethylene-α - olefin copolymer rubbers or ethylene- α -olefin-non-conjugated diene copolymer rubbers.

The rubber composition of the present invention may contain carbon black, organic peroxides, anti-oxidants, vulcanization accelerators, processing aids, stearic acid, reinforcing agents, fillers, plasticizers, softening agents and the like. They are mixed in kneaders such as rolls and Bunbary mixer to obtain a vulcanizable rubber composition. Vulcanizing is generally carried out at a temperature of 120°C or higher, preferably 150 to 220°C for about 1 to 30 minutes. Any of press vulcanization, steam vulcanization and hot-air vulcanization may be applied to.

The rubber composition of the present invention may contain zinc oxides, ferrite or powders or fibers of electric conductive metals such as stainless steel, copper and silver in order to give large gravity, magnetic property or electro-magnetic-wave shielding property, respectively. Such additives may be used alone or in combination of the two or more.

The vulcanized rubber composition obtained by vulcanizing the rubber composition of the present invention has large strength and flame-resistance together with excellent properties of ethylene-$\alpha$-olefin copolymer rubbers and ethylene-$\alpha$-olefin-nonconjugated diene copolymer rubbers. Thus, the vulcanized rubber composition is used suitably for various applications, for example, as a covering material for electric cables, a gasket, a sealing board of construction, an insulator or the like taking advantage of its characteristics.

The present invention is explained by the following examples.

Examples 1 to 4 and Comparative Examples 1 to 5

The components shown in Table 1 (excluding the peroxide) were kneaded in Banbury mixer (1500 cc) adjusted to 90°C at a rotor velocity of 60 rpm for 5 minutes. Then, the mixture was kneaded with a peroxide in an open roll mill (8 inch) to obtain a rubber composition. Then, the rubber composition was subjected to press curing (170°C x 15 minutes) to obtain a vulcanized rubber composition. Evaluation of the vulcanized rubber composition was conducted in accordance with JI K 6301. Measurement of oxygen index which is an index for flame-resistance was conducted in accordance with JIS K 7201. The larger the oxygen index, the more excellent the flame-resistance. The results are shown in Tables 1 - 2.

All Examples according to the present invention showed extremely large strength due to aluminium hydroxide or magnesium hydroxide and zinc acrylate compounds.

Table 1

| | Example 1 | Example 2 | Example 3 | Example 4 |
|---|---|---|---|---|
| Components *1 (part by weight) | | | | |
| Rubber component *2 | 100 | 100 | 100 | 100 |
| $Al(OH)_3$ *3 | 100 | 100 | 0 | 0 |
| $Mg(OH)_2$ *4 | 0 | 0 | 100 | 100 |
| Zinc acrylate compound *5 | 10 | 30 | 10 | 30 |
| Evaluation | | | | |
| Properties of vulcanized product *6 | | | | |
| Tensile strength ($Kg/cm^2$) | 171 | 196 | 166 | 186 |
| Elongation % | 120 | 90 | 110 | 80 |
| Hardness JIS-A | 82 | 91 | 90 | 95 |
| Oxygen index | 26 | 26 | 28 | 28 |

Table 2

| | Comparative Example | | | | |
|---|---|---|---|---|---|
| | 1 | 2 | 3 | 4 | 5 |
| Components *1 | | | | | |
| (part by weight) | | | | | |
| Rubber component *2 | 100 | 100 | 100 | 100 | 100 |
| $Al(OH)_3$ *3 | 100 | 0 | 0 | 0 | 0 |
| $Mg(OH)_2$ *4 | 0 | 100 | 0 | 0 | 0 |
| Zinc acrylate compound *5 | 0 | 0 | 0 | 10 | 30 |
| Evaluation | | | | | |
| Properties of vulcanized product *6 | | | | | |
| Tensile strength ($Kg/cm^2$) | 42 | 46 | 40 | 49 | 118 |
| Elongation % | 260 | 290 | 720 | 130 | 170 |
| Hardness JIS-A | 66 | 67 | 37 | 62 | 74 |
| Oxygen index | 26 | 28 | 21 | 21 | 21 |

*1 Components

In addition to the components shown in Tables 1 - 2, 5 parts by weight of zinc oxide, 1 part by weight of stearic acid, 1 part by weight of an aging inhibitor MB (antioxidant manufactured by Sumitomo Chemical Co., Ltd.), 7 parts by weight of DCP (40 % - dicumyl peroxide manufactured by Nippon Oil & Fats Co., Ltd.) and 2 parts by weight of talc were used as common components.

*2 Rubber component

Ethylene-propylene-5-ethylidene-2-norbornene copolymer rubber (E501 manufactured by Sumitomo Chemical Co., Ltd., Moony viscosity $ML_{1+4}$ 100°C 43, ethylene content 50 wt%, iodine value 11) was used.

*3 $Al(OH)_3$

Aluminium hydroxide (commercial name "HIGILITE" manufactured by Showa Chemical Co., Ltd.,)

was used.

*4 $Mg(OH)_2$

Magnesium hydroxide (commercial name "KISUMA 5B" manufactured by Kyowa Denko Co., Ltd.,) was used.

*5 Zinc acrylate compound

The compound (zinc diacrylate) represented by the formula (1) where R=hydrogen atom, m=2 and k=0 was used.

*6 Properties of cured product

Properties of the product vulcanized at 170°C x 15 minutes were evaluated.

As explained above, the present invention provides an ethylene-α -olefin copolymer rubber composition or an ethylene-α -olefin-nonconjugated diene copolymer rubber composition having high-strength and flame-resistance as well as excellent properties of vulcanized ethylene-α -olefin copolymer rubbers or vulcanized ethylene-α -olefin-nonconjugated diene copolymer rubbers. The composition provides a vulcanized rubber composition suitable for covering material of electric cables.

## Claims

1. A rubber composition which comprises
   a) an ethylene-α-olefin copolymer rubber, an ethylene-α-olefin-nonconjugated diene copolymer rubber or a mixture of two or more thereof,
   b) aluminium hydroxide, magnesium hydroxide, or a mixture thereof, and
   c) at least one zinc acrylate compound of formula (I):

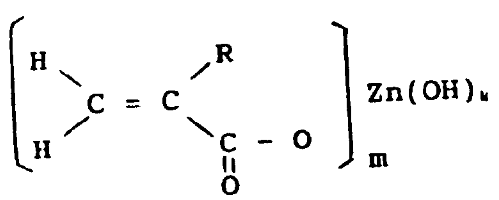

(I)

   wherein R is hydrogen or methyl, m is 1 or 2 and k is 0 or 1.

2. A rubber composition according to claim 1, wherein the copolymer rubber of component (a) comprises a copolymer of an α-olefin selected from propylene, 1-butene, 1-hexene, 4-methyl-1-pentene, 1-octene and 1-decene.

3. A composition according to claim 2 wherein the α-olefin is propylene.

4. A composition according to any one of claims 1 to 3 wherein the copolymer rubber of component (a) comprises a copolymer of a nonconjugated diene selected from 1,4-hexadiene, dicyclopentadiene and 5-ethylidene-2-norbornene.

5. A composition according to any one of claims 1 to 4 comprising 5 to 1000 parts by weight of component (b) per 100 parts by weight of component (a).

6. A composition according to claim 5, comprising 50 to 600 parts by weight of component (b) per 100 parts

by weight of component (a).

7. A composition according to any one of claims 1 to 6 wherein component (c) is selected from zinc diacrylate, zinc acrylate hydroxide and zinc dimethacrylate.

8. A composition according to any one of claims 1 to 7 comprising 0.1 to 100 parts by weight of component (c) per 100 parts by weight of component (a).

9. A composition according to claim 8, comprising 1 to 50 parts by weight of component (c) per 100 parts by weight of component (a).

10. A vulcanized rubber composition obtainable by vulcanising a composition according to any one of claims 1 to 9.

11. A covering material for electric cables comprising a vulcanized rubber according to claim 10.

European Patent Office

# EUROPEAN SEARCH REPORT

Application Number
EP 93 30 7546

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | GB-A-2 078 688 (XEROX)<br>* claims 1,2,7 *<br>--- | 1-10 | C08K3/22<br>C08K5/09 |
| P,X | DE-A-42 22 760 (NIPPON ZEON)<br>* claims 1,3,7 *<br>----- | 1 | |
| | | | TECHNICAL FIELDS SEARCHED (Int.Cl.5) |
| | | | C08K |

The present search report has been drawn up for all claims

| Place of search | Date of completion of the search | Examiner |
|---|---|---|
| THE HAGUE | 5 January 1994 | Goovaerts, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)